# EUROPEAN PATENT SPECIFICATION

(11) **EP 2 408 959 B1**
(45) Date of publication and mention of the grant of the patent: **24.10.2018**
(21) Application number: 10707928.7
(22) Date of filing: 12.03.2010
(51) Int. Cl.: D01F 6/04, D21H 13/14

(54) **HEAT SEALABLE FILTER PAPER AND ITS USE**
HEISSSIEGELBAREN FILTERPAPIER UND DIE VERWENDUNG
PAPIER FILTRE SCELLABLE À CHAUD ET SON UTILISATION

(30) Priority: 18.03.2009 EP 09003912
(43) Date of publication of application: 25.01.2012
(73) Proprietor: baumhueter extrusion GmbH, 33378 Rheda-Wiedenbrück (DE)
(72) Inventor: KNACK, Ingo, 21493 Schwarzenbek (DE)
(74) Representative: Teipel, Stephan
(86) International application number: PCT/EP2010/053183
(87) International publication number: WO 2010/105981

(56) References cited:
- EP-A- 0 621 356
- EP-A1- 1 266 997
- GB-A- 1 603 638
- US-A- 5 160 464
- US-B1- 6 437 014
- DATABASE WPI Week 199239 Thomson Scientific, London, GB; AN 1992-319074 XP002536128 & JP 04 222206 A (SHOWA DENKO KK) 12 August 1992 (1992-08-12)
- DATABASE WPI Week 197927 Thomson Scientific, London, GB; AN 1979-49622B & JP S54 63400 A (SHOWA ELECTRIC WIRE CO LTD) 22 May 1979 (1979-05-22)

## Description

The present invention relates to a heat sealable filter paper comprising a polyethylene polymer fiber obtainable by melt-spinning of a polyethylene polymer, the use of the fiber and a process for the manufacture of the fiber.

The use of synthetic wood pulp is known in the art as replacement for wood pulp for the production of paper-like substrates, e.g. tea-bags or coffee-pads, e.g. from US 4,049,493. In particular, tea-bag papers consist of about 75 % of natural fiber and about 25 % of synthetic material in order to provide the possibility of heat-sealing the bags.

US 5,173,154 discloses a tea-bag paper comprising a first phase of natural fibers in a weight-percentage from 60 % to 85 %, and a second phase of heat-sealable synthetic fibers with the remainder of the weight-percentage of about from 15 % to 40 %. The disclosed tea-bag paper is said to be processable on special high-speed automatic tea-bag packing machines, because of the heat-sealable side of the bag.

While several processes for the preparation of synthetic wood pulp are known in the art, e.g. from US 4,049,492 and US 4,049,493 the typical processes for the production of synthetic wood pulp are complicated and comprise steps of refining solid polyolefinic fibrids in organic dispersants and replacement of the dispersant with water so as to form an essentially aqueous slurry of the polyolefin fibrids.

Thus, there is still a need in synthetic polymeric material which can be manufactured in an easy and economic way and which is useful as a replacement for wood pulp, e.g. for the production of paper-like substrates, in particular heat-sealable filter paper.

Polyethylene fibers are known in the art for many applications due to the advantageous properties of polyethylene, copolymers and polymer blends thereof. Polyethylene is a polymer with thermoplastic properties, it shows excellent chemical stability and has a rather low prize. Polymer fibers of different properties can be manufactured by melt-spinning of a polyethylene polymer. However, in a melt-spinning process the specific properties of the polymer material must be taken into account. Important melt-spinning process parameters, and consequently of importance to the property profile of the fiber to be produced, are molecular weight, melt-flow index and raw material molecular weight distribution.

It is generally possible to melt spin polymers with a MFI of lower than 5 g/10 min. However, high pressures have to be applied to melt-spin these high viscous polymers, which is cost-intensive. Further the maximum speed of melt spinning of these polymers is significantly reduced compared to speeds obtainable with polymers having a MFI of about 5 g/10 min to about 100 g/10 min, in particular a MFI of about 5 g/10 min to about 40 g/10 min.

On the other hand, if the MFI value of the polymer is too high, the viscosity of the polymer becomes so low that the fiber cannot be drawn from the nozzle orifice. Thus no continuous fibers can be obtained by melt-spinning low viscosity polymers. Further the fiber fragments which can be obtained from melt-spinning a polymer having a high MFI (above 100 g/10 min) show low mechanical stability and the fibers are not suitable for further processing, e.g. weaving.

Therefore, high demands are made on the quality of the raw material regarding the rheological properties of the polymer melt due to the melt-spinning process. As a result thereof the MFI value of polymers suitable for the preparation of fibers by melt-spinning must be in a certain range of above 5 g/10 min to about 100 g/10 min, in particular of above 5 g/10 min to about 40 g/10 min.

However, it has been found that when a polyethylene fiber made of polymer having a MFI of above 5 g/10 min to about 100 g/10 min is used to replace synthetic wood pulp in heat-sealable filter papers, deposits on machine parts are built up during manufacture of the filter papers, in particular in the drying unit, and during heat-sealing of the filter papers in the tea-bag machine. These deposits negatively affect the machine's function and thereby rendered the known polyethylene polymer fibers unsuitable for use in heat-sealable filter papers.

To overcome this problem of prior art it has now surprisingly been found that when known polyethylene fibers are crosslinked by ionizing radiation, the crosslinked polymer fibers can excellently be used as replacement for synthetic wood pulp, in particular in heat-sealable filter papers. In particular, no deposits are built on machine parts during manufacture of the filter papers, in particular in the drying unit, and when the filter papers are heat-sealed in the tea-bag machine.

Thus, the present invention relates to a heat-sealable filter paper comprising a polymer fiber obtainable by melt-spinning of a polymer having a MFI of above 5 g/10 min to about 100 g/10 min, preferably above 5 g/10 min to about 40 g/10 min, in particular above 10 g/10 min to about 40 g/10 min, characterized in that subsequent to the melt-spinning step the fiber is treated with ionizing radiation. The MFI value of the crosslinked fiber is 5 g/10 min or less, preferably about 2 g/10 min or less, such as about 1.5 g/10 min or less, or even about 1 g/10 min or less.

Polymers suitable for the preparation of fibers are not particularly limited. Any polymer known to the skilled person and being useful in the preparation of polymer fibers by melt-spinning can be employed. Examples for such polymers are polymers containing a polyolefin, a polyamide, a polyester, a thermoplastic elastomer and mixtures of any of these.

The polymer used in the preparation of the fiber of the present invention is a polyethylene. The polyethylene can be a homopolymer or a copolymer, such as a polyethylene homopolymer, a polyethylene copolymer, such as a polyethylene/polypropylene copolymer, a polymer blend comprising polyethylene as one polymer, such as polyethylene/polypropylene blend or a mixture of any of these, including polyethylene-based thermoplastic elastomers (TPEs).

The polymer used in the polymer fibers substantially comprises polyethylene, or a copolymer of polyethylene or polymer blend comprising polyethylene as one polymer. The polyethylene used can be a homopolymer, or a copolymer of polyethylene, or polymer blend comprising polyethylene homopolymer or a polyethylene copolymer as one polymer. Preferred copolymers or blends of polyethylene are copolymers or blends between polyethylene and α-olefins, such as propylene and 1-butene, preferably propylene. Preferably, a polyethylene containing about 1 wt.-% to about 15 wt.-%, more preferably about 2 wt.-% to about 9 wt.-% of an α-olefin, e.g. propylene, as a copolymer or polymer blend and most preferably having a melt flow index of about 5 g/10 min to about 20 g/10 min is used. In particular, random copolymers, block copolymers or polymer blends between ethylene and propylene are used. The polyethylene homopolymer, copolymer or polymer blend may be mixed with propylene polymer such as polypropylene, e.g. such having a melt flow index of about 5 g/10 min to about 20 g/10 min, and/or copolymers of ethylene with polymers like propylene, vinyl acetate, acrylic acid, and ethyl acrylate. The amount of polyethylene homopolymer or copolymer is preferably about 70 wt.-% to about 100 wt.-%, more preferably about 80 wt.-% to about 95 wt.-%, such as about 85 wt.-% to about 90 wt.-% of the polymer. Most preferred the polymer is a polyethylene homopolymer.

The polymer can be a polyethylene-based TPE (thermoplastic elastomer) which are sometimes referred to in the art as "thermoplastic rubber". TPE is a class of copolymer or polymer blends which consist of materials with both thermoplastic and elastomeric properties. Typically TPEs are polyethylene or polypropylene blends with rubbers, such as polyethylene/EPDM blends or polypropylene/EPDM blends (EPDM = ethylene propylene diene monomer rubber), wherein the monomer is preferably M-class (referring to the classification in ASDN Standard D-1418). Typical EPDM rubbers are DCPD (dicyclopentadiene), ENB (ethylidene norbornene) and VNB (vinyl norbornene). The typical polyethylene content in the polyethylene/EPDM blends is about 50 wt.-% to about 95 wt.-%, more preferably about 70 wt.-% to about 90 wt.-%. The typical ethylene content in the EPDM rubber is about 45 wt.-% to about 75 wt.-%, preferably about 55 wt.-% to about 70 wt.-%. The higher the ethylene content, the higher the loading possibilities of the polymer, which leads to better mixing and extrusion. The dienes, which are typically comprised between about 2.5 wt.-% to about 12 wt.-%, preferably about 5 wt.-% to about 10 wt.-%, of the polymer blend, serve as crosslinks which provide resistance to unwanted tackiness, creep or float during end use.

Further, the polyethylene can be HDPE, LDPE, LLDPE, or mixtures thereof. Preferably HDPE, LDPE or LLDPE are used in the above described polymer blends. Alternatively, the polyethylene can be a polyethylene/EVA (ethylene vinyl acetate) copolymer which is preferably used in the above described polymer blends. Typically, the content of the vinyl acetate in the EVA is about 5 wt.-% to about 45 wt.-%, preferably about 10 wt.-% to about 40 wt.-%, with the remainder preferably being ethylene. EVA based copolymers have advantageous elastomeric properties, and yet can be processed like other thermoplastics.

The term "substantially comprises" as used herein means that the amount of the respective components is at least 80 wt.-%, more preferably at least 90 wt.-%, in particular at least 95 wt.-%, e.g. at least 99 wt.-% based on the total weight of the respective composition. In one preferred embodiment the polymer used for the polymer fibers consists of polyethylene or a copolymer or polymer blend thereof, respectively, as the only polymeric component.

A further advantage of using polyethylene, in particular with the fibers used in present invention as described above, is that polyethylene typically has a better chemical resistance, in particular better resistance to acids (such as hydrofluoric acid) compared to other polymers, in particular polypropylene or polyesters. Consequently, the polyethylene fibers and products prepared from the polyethylene fibers show an improved chemical resistance compared to known products made from other polymers. Thus the products comprising the fibers according to the present invention comprising polyethylene or the respective copolymers or polymer blends as described above, which have been subjected to an ionizing radiation treatment, both show an excellent temperature resistance conferred by the radiation and chemical resistance conferred by the polyethylene material.

The polymer used in the preparation of the fiber of the present invention can contain further polymers as well as additives, such as colourants, glidents, spinning additives, functional copolymers, low molecular weight polypropylene, polypropylene waxes, atactic polypropylene, reactive components, thermostabilizers, UV stabilizers, etc. The additives can be selected by a person skilled in the art according to the specific requirements of the melt-spinning process as well as the intended use of the final fibers.

In a preferred embodiment the polymer comprises known metal activators, e.g. metal activators comprising redox-active transition metal ions like Fe²⁺/Fe³⁺, Co²⁺/Co³⁺, Cu⁺/Cu²⁺, Cr²⁺/Cr³⁺, or Mn²⁺/Mn³⁺/Mn⁴⁺, such as CuO. Typically the polymer comprises the metal activator in an amount of about 0.001 wt.-% to about 1 wt.-%, preferably in an amount of about 0.01 wt.-% to about 0.5 wt.-%, based on the total weight of the polymer. It has been found that when metal activators are present in the polymer the efficacy of the ionizing radiation is increased. Thus, the presence of metal activators is advantageous as less radiation is necessary in order to provide a sufficient crosslinking of the polyethylene polymer.

The polymer used in the preparation of the fiber in the present invention can comprise a crosslinking agent. The crosslinking agent to be used with the polyethylene in the polymer as described above typically is a triacrylate or trimethacrylate of an aliphatic polyhydric alcohol. Specific compounds suitable as crosslinking agent include, for example, trimethylol propane triacrylate, trimethylol propane trimethacrylate, trimethylol ethane triacrylate and tetramethylol methane triacrylate. Particularly preferable are trimethylol propane triacrylate and trimethylol propane trimethacrylate. The crosslinking agent is typically present in an amount of about 0.5 wt.-% to about 4 wt.-%, based on the weight of the polyethylene. Trimethylol propane triacrylate and trimethylol propane trimethacrylate are highly compatible with polyethylene and exhibit a high crosslinking effect. Most preferably, the amount of crosslinking agent ranges between about 1.0 wt.-% to about 2.5 wt.-%, based on the weight of the polyethylene. Derivatives of phenolic compounds may additionally be used, such as those compounds disclosed in US 4,367,185, to enhance the crosslinking effect. The amount of the phenolic compound derivative typically is in the range from 0.01 wt.-% to 5.0 wt.-% based on the weight of the polyethylene.

The polymer used in the preparation of the fiber of the present invention can comprise a silane(-based) crosslinking agent. Typical silane crosslinking agents are known in the art. Non-limiting examples of suitable silane crosslinking agents include unsaturated silanes that comprise an ethylenically unsaturated hydrocarbyl group, such as vinyl, allyl, isopropenyl, butenyl, cyclohexenyl or gamma-(meth)acryloxy allyl group, and a hydrolysable group such as a hydrocarbyloxy, hydrocarbonyloxy, and hydrocarbylamino group. In another embodiment the silanes are unsaturated alkoxy silanes which can be grafted onto the polymer. Examples of suitable silane crosslinking agents are vinyl trimethoxy silane, vinyltriethoxysilane, vinyltris(2-methoxyethoxy)silane, vinyltriacetoxysilane, vinylmethyldimethoxysilane, 3-methacryloyloxypropyltrimethoxysilane, and combinations thereof. The amount of silane crosslinking agent is typically in the range of about 0.1 wt.-% to about 1 wt.-%, preferably about 0.5 wt.-% to about 1 wt.-%, based on the total weight of the polymer. While the above mentioned crosslinking agents as well as silicone based crosslinking agents described herein can be excellently combined with crosslinking by ionizing radiation as described herein, it has been found that crosslinking by peroxides as known in the art cannot suitably be applied for the manufacture of crosslinked polyethylene fibers.

The preparation of fibers by melt-spinning is known to a person skilled in the art. The process is described, for example, by B. von Falkai, Synthesefasern, Grundlagen, Technologie, Verarbeitung und Anwendung, Verlag Chemie, Weinheim 1981. In the melt-spinning process the properties of the polymer are generally not significantly altered. Thus, for example the MFI value of the fibers obtained in this melt-spinning process is nearly the same as the MFI value of the polymer granules used as starting material. Therefore, the MFI value of polymer fibers obtained by melt-spinning is in the same range as the MFI value of those polymers which are suitable for the melt-spinning process, i.e. the MFI is in the range of above 5 g/10 min to about 100 g/10 min, in particular above 5 g/10 min to about 40 g/10 min, e.g. from about 10 g/10 min to about 40 g/10 min.

According to the invention the rheological properties of the polymer fibers obtained in the melt-spinning process is tailored according to the requirements of the intended use of the fibers by treating the fibers with ionizing radiation. Preferably the ionizing radiation is a gamma or beta radiation.

The gamma- and beta-ray treatment is carried out by means of irradiation procedures known in the art. Beta-rays, also known as electron beams, are generated by electron accelerators generally known in the art. Gamma-rays used in industrial applications are generally generated in the radioactive conversion of cobalt 60 (⁶⁰Co) to nickel 60 (⁶⁰Ni). The thereby emitted gamma-rays have a high penetration depth. While the time of irradiation with beta-rays is generally within seconds, the time of irradiation with gamma-rays can be within hours. The radiation dose applied on the polymer fibers according to the invention is not particularly limited but normally in the range of about 10 kGy to about 300 kGy (kilo Gray), preferably about 30 kGy to about 160 kGy.

By crosslinking the polymer, i.e. the treatment with ionizing radiation, the properties of the polymer fiber are altered. For example the MFI value of the polymer fiber, depending on the polymer used for the preparation of the fiber, is increased or decreased. For example in case of polypropylene the MFI is increased due to bond cleavage of the polymer chain while in case of polyethylene the MFI is decreased by crosslinking of the polymer. Accordingly, other properties of the polymer fiber, such as the average molecular weight of the polymer and/or the molecular weight distribution of the polymer are altered. Further, by irradiating the thermoplastic properties of polyethylene are changed to thermoelastic properties. This can be seen e.g. in the loss of thermal shrinkage of the polyethylene after irradiation. Thus, the properties of the polyethylene fiber can be tailored according to the requirements of the intended use of the fibers.

Of particular relevance for the polymer fibers of the present invention is the MFI (melt flow index) value, also designated as melt flow rate (MFR). The MFI value of the polymer fibers is measured according to DIN EN ISO 1133. According to this definition the standard measurement conditions for measuring the MFI are 190°C/2.16 kg for polyethylene and 230°C/2.16 kg for polypropylene. The unit for the MFI is g/10 min and it is measured by means of a capillary rheometer, whereby the material, i.e. the polymer, is melted in a cylinder form and pressed through a defined nozzle with a certain pressure. Then the emerged mass of the polymer melt is detected as a function of time.

The polymer used in the process for the preparation of the polymer fiber according to the invention is a polyethylene homopolymer, polyethylene copolymer, polymer blends comprising polyethylene as one polymer or a mixture thereof. The MFI value of the crosslinked fiber is about 5 g/10 min or less, preferably about 2 g/10 min or less, such as about 1.5 g/10 min or less, or even about 1 g/10 min or less.

The polymer fiber of the present invention is obtainable by a process for the manufacture of a polymer fiber comprising the steps of melt-spinning of a polymer and subsequent treatment of the fiber with ionizing radiation. The present invention also relates to said process. In this process the fiber is obtained either as a continuous strand or the strand is cut into pieces. The treatment with ionizing radiation can be carried out directly after the fiber is formed, for example before, during or after the fiber is stretched, but before it is cut into pieces or after it is cut into pieces. It is also possible that after the continuous fiber strand or the cut fiber pieces are obtained, these are stored for some time and the step of treatment with an ionizing radiation is carried out at a later time.

An appropriate diameter of the polymer fiber according to the invention is typically less than about 170 µm, preferably less than about 100 µm, in particular less than about 40 µm, and is preferably in the range of from about 5 µm to about 170 µm, more preferably from about 12 µm to about 50 µm, and most preferably the diameter of the fiber is about 20 µm to about 25 µm, e.g. about 23 µm.

The length of the polymer fibers before crosslinking the fiber by ionizing radiation is typically less than about 20 mm, preferably less than about 10 mm, in particular less than about 6 mm, and preferably from about 0.1 mm to about 40 mm, such as from about 2 mm to about 20 mm, and in particular from about 2 mm to about 5 mm, e.g. about 2 mm to about 3 mm. Crosslinking the fibers by ionizing radiation leads to a reduction of the length of the fiber, typically in the range of a reduction of about one third of the length before radiation, dependent on the total dose applied. Thus, preferably the fiber is preferably cut before radiation as larger fiber cuts are more advantageous, e.g. for handling purposes.

In one aspect the present invention relates to the use of a polyethylene fiber which has been crosslinked by ionizing radiation as described above, in heat sealable filter papers.

In a preferred aspect the present invention provides the use of the above polymer fibers in hot sealable filter paper as well as hot sealable filter paper containing a polymer fiber as described above. In hot sealable filter paper polyethylene fibers containing a polyethylene homopolymer, polyethylene copolymer, polymer blends comprising polyethylene as one polymer or mixtures thereof are preferably used. By the treatment with ionizing radiation the polymer is crosslinked, which can be detected by a decrease in MFI, thereby obtaining products having a higher melt viscosity compared to products obtained from polyethylene fibers after melt-spinning but without treatment with ionizing radiation. Due to the crosslinking of the fibers advantageous properties can be imparted to the filter paper as described above.

A bicomponent fiber containing a crosslinked polyethylene fiber as described above as one component can be used. Bicomponent polymer fibers are known as either side-by-side fibers or sheath-core fibers. When polyethylene fibers having a MFI of from above 5 g/10 min to about 100 g/10 min are applied as one component of the bicomponent fiber, the other component has to be a supporting polymer which provides sufficient stability during heat-sealing, like polyesters. By crosslinking the polyethylene a bicomponent fiber can be obtained having excellent properties, wherein in particular the crosslinked polyethylene component provides sufficient support, and additionally renders the fiber heat-sealable.

In present invention the heat-sealable filter paper contains a crosslinked polyethylene fiber, in particular the polymer fiber as described above. The heat-sealable filter paper according to the present application can be advantageously used in tea-bags or coffee-pads. Thus, the present invention preferably also relates to tea-bags or coffee-pads comprising heat-sealable filter paper according to the present invention, and the respective use of the fibers in tea-bags or coffee-pads.

The heat-sealable filter paper according to the present application typically contains the ingredients as known from filter papers, e.g. natural fibers in a weight-percentage from about 60 % to about 85 %, the remainder of about 40 wt.-% to about 15 wt.-% being synthetic fibers, like synthetic wood pulp, wherein the synthetic fibers are at least partially, in particular in an amount of about 20 wt.-% to about 100 wt.-%, preferably of about 50 wt.-% to about 100 wt.-%, replaced by the crosslinked polyethylene fiber according to the present application.

The crosslinked polyethylene fiber, in particular the above-described polymer fiber can be used also in air laid products, hydroentangled products and non-woven products as well as these products containing a crosslinked polyethylene fiber, in particular the polymer fiber as described above. The preparation of these products from polymer fibers is known in the art. By tailoring the properties of the polymer fibers by irradiation as described above, new and advantageous products of these types can be prepared.

The present invention will now be further illustrated by the examples which are not intended to be construed as limiting.

### Examples

### Beta-ray treatment of Polyethylene (PE) Fibers:

PE fiber samples of the type PB Eurofiber cut F-2427 6 mm length with 4 dtex (corresponding to a diameter of about 23 µm), manufactured from baumhueter extrusion GmbH were treated with beta-rays at doses of 35 - 160 kGy. The length of the fibers after irradiation is about 4.5 mm. The MFI values were measured before and after treatment with ionizing radiation. Further PE fiber samples of the type PB Eurofiber cut F-2382 2 mm length with 4 dtex (corresponding to a diameter of about 23 µm) manufactured from baumhueter extrusion GmbH were treated with beta-rays at doses of 50 kGy. The length of the fibers after irradiation is about 1.5 mm. The MFI values were measured before and after treatment with ionizing radiation. The MFI measurements were carried out according to DIN EN ISO 1133 under standard conditions, namely 190°C/2.16 kg. Filter papers comprising the fibers F-2382 before and after crosslinking by irradiation were tested for heat sealability. The results are summarized in the following table.

**Table 1**

| **Fiber** | **dose (kGy)** | **MFI before treatment (g/10 min; 190°C/2.16 kg)** | **MFI after treatment (g/10 min; 190°C/2.16 kg)** | **heat-sealable filter paper** |
|---|---|---|---|---|
| F-2427 | 0 | 30 | -- | Not tested |
| | 35 | 30 | 11 | " |
| | 50 | 30 | 4 | " |
| | 160 | 30 | 0* | " |
| F-2382 | 0 | 20 | -- | 1) |
| | 50 | 20 | 4.7 | 2) |

| | | | | |
|---|---|---|---|---|
| * Highly crosslinked, no longer meltable. 1) Without crosslinking the fiber is not processable on a paper machine due to problems in the drying unit, caused by the easy melting of the fiber. 2) Production of tea-bag paper without any problems. The paper was successfully tested on a tea-bag machine. | | | | |

The above results demonstrate that the irradiated PE fibers according to the invention can be applied in heat-sealable papers, while untreated fibers cannot be applied. Further no polymer deposits on machine parts can be detected during manufacture of the filter papers in the tea-bag machine when filter papers containing irradiated PE fibers are heat sealed.

## Claims

1. Heat-sealable filter paper comprising a polymer fiber obtainable by melt-spinning of a polymer having a MFI of above 5 g/10 min to 100 g/10 min, **characterized in that** subsequent to the melt-spinning step the fiber is treated with ionizing radiation, wherein the polymer is a polyethylene homopolymer, polyethylene copolymer, polymer blend comprising polyethylene as one polymer, or a mixture thereof, and wherein the crosslinked polymer fiber has a MFI of 5 g/10 min or less, whereas MFI is measured according to DIN EN ISO 1133 at 190°C/2.16 kg.

2. Heat-sealable filter paper according to claim 1, wherein the crosslinked polymer fiber has a MFI of 2 g/10 min or less.

3. Heat-sealable filter paper according to claim 1 or 2, wherein the radiation dose of the ionizing irradiation is in the range of 10 kGy to 300 kGy.

4. Use of a crosslinked polyethylene fiber as defined in any of claims 1 to 3 in heat-sealable filter paper.

## Patentansprüche

1. Heißsiegelbares Filterpapier, umfassend eine Polymerfaser, die durch Schmelzspinnen eines Polymers mit einem MFI von über 5 g/10 min bis 100 g/10 min erhalten werden kann, **dadurch gekennzeichnet, dass** nach dem Schmelzspinnschritt die Faser mit ionisierender Strahlung behandelt wird, wobei das Polymer ein Polyethylenhomopolymer, Polyethylencopolymer, eine Polymermischung, umfassend Polyethylen als ein Polymer, oder ein Gemisch davon ist und wobei die vernetzte Polymerfaser einen MFI von 5 g/10 min oder weniger hat, wobei der MFI nach DIN EN ISO 1133 bei 190 °C/2,16 kg gemessen wird.

2. Heißsiegelbares Filterpapier nach Anspruch 1, wobei die vernetzte Polymerfaser einen MFI von 2 g/10 min oder weniger hat.

3. Heißsiegelbares Filterpapier nach Anspruch 1 oder 2, wobei die Strahlungsdosis der ionisierenden Strahlung im Bereich von 10 kGy bis 300 kGy liegt.

4. Verwendung einer vernetzten Polyethylenfaser, wie in einem der Ansprüche 1 bis 3 definiert, in heißsiegelbarem Filterpapier.

## Revendications

1. Papier filtre thermoscellable comprenant une fibre de polymère pouvant être obtenue par filage par fusion d'un polymère ayant un indice de fluidité de plus de 5 g/10 min à 100 g/10 min, **caractérisé en ce que** suite à l'étape de filage par fusion, la fibre est traitée avec un rayonnement ionisant, dans lequel le polymère est un homopolymère de polyéthylène, un copolymère de polyéthylène, un mélange de polymères comprenant du polyéthylène en tant qu'un polymère, ou un mélange de ceux-ci, et dans lequel la fibre de polymère réticulée a un indice de fluidité de 5 g/10 min ou moins, alors que l'indice de fluidité est mesuré selon la norme DIN EN ISO 1133 à 190 °C/2,16 kg.

2. Papier filtre thermoscellable selon la revendication 1, dans lequel la fibre de polymère réticulée a un indice de fluidité de 2 g/10 min ou moins.

3. Papier filtre thermoscellable selon la revendication 1 ou 2, dans lequel la dose de rayonnement de l'irradiation ionisante est dans la plage de 10 kGy à 300 kGy.

4. Utilisation d'une fibre polyéthylène réticulée telle que définie dans l'une quelconque des revendications 1 à 3 dans un papier filtre thermoscellable.
